# EUROPEAN PATENT APPLICATION

(11) **EP 4 592 101 A1**
(43) Date of publication of application: **30.07.2025**
(21) Application number: 24153898.2
(22) Date of filing: 25.01.2024
(51) Int. Cl.: B60G 15/14

(54) **SYSTEM, METHOD, AND CONTROL UNIT FOR CONTROLLING A RIDE HEIGHT OF A VEHICLE**

(71) Applicant: Nio Technology (Anhui) Co., Ltd, Hefei City, Anhui 230601 (CN)
(72) Inventor: FANG, Haiping, Oxford (GB); SPRENGEL, Thomas, Stuttgart (DE)
(74) Representative: Vossius & Partner Patentanwälte Rechtsanwälte mbB

(57) **Abstract**

The present disclosure relates to a system (10) for controlling a ride height (rh) of a vehicle (80) which has one or more wheels (12). The system (10) includes a first ride height setting device (20) configured to adjust the ride height (rh) of the vehicle by applying a first force to a first section (22) of the vehicle at a wheel (12) of the vehicle. The system (10) includes a second ride height setting device (24) configured to maintain the ride height (rh) set by the first ride height setting device (20) by applying a second force to the first section (22) of the vehicle. The system (10) is configured to adjust a ratio between the first force and the second force.

The present disclosure also relates to a method and a control unit (40) for controlling a ride height (rh) of a vehicle (80).

## Description

Vehicles play a relatively important role in everyday life. For instance, vehicles are widely used as a means for transportation, e.g., for transporting humans, animals, and/or goods. Hence, vehicles have been developed relatively intensely in order to continuously improve their properties.

For instance, the comfort and user-friendliness of vehicles are relatively important aspects and can be relevant selling points of vehicles. In this regard, vehicles have been developed in the known prior art which enable an adjustment of the ride height of the respective vehicles. For instance, it may be advantageous to set the vehicle to a certain ride height in certain situations, whereas a different ride height may be advantageous in other situations.

It is also known from the prior art to adjust a vehicle's ride height while driving, e.g., to adapt the vehicle to properties of the terrain on which the vehicle is travelling, and while the vehicle is at a standstill. However, the respective systems for adjusting a vehicle's ride height have several drawbacks.

For one, the adjusted ride height may only be maintained for a limited time, in particular a relatively short time.

One key development for the known systems was the introduction of air spring systems of the transportation carriers. Air spring systems can be used for stationary or steady moving conditions for the adjustment of vehicle height. However, due to current system limitations, the adjusted ride height cannot be maintained for long in the known systems. Furthermore, the energy consumption for adjusting the vehicle's ride height, and potentially maintaining the adjusted ride height, is relatively high for the systems known from the prior art. Moreover, at least some of the systems can adjust the vehicle's ride height only at one wheel or one axle of the vehicle, in particular only at one wheel or only at one axle of the vehicle at the same time, e.g., due to the relatively high energy consumption and/or the relatively high heat generation of the known systems during operation of the respective system.

Another drawback from at least some systems known from the prior art is that the respective systems adjust, in particular increase, the vehicle's ride height at a relatively slow speed, which may reduce the user-friendliness and the convenience of the vehicle.

The above-identified aspects have not, or at least not sufficiently, been addressed in the prior art. Thus, there is a need to improve the known mechanisms or systems for controlling a ride height of a vehicle.

It is therefore an object of the present invention to provide an improved means for controlling a ride height of a vehicle, in particular by providing improvement to one or more of the above-identified aspects.

The above-identified object is achieved by a system for controlling a ride height of a vehicle, as defined by the features of claim 1. Preferred embodiments are defined by the features of the dependent claims, respectively.

The vehicle may have one or more wheels. Although the present disclosure describes the embodiments herein generally with respect to a vehicle which includes one or more wheels, the present disclosure may apply to any vehicle in general, e.g., a vehicle without any wheels, e.g., a vehicle which slides on or across the ground.

The vehicle is preferably a land vehicle. However, the vehicle may be any vehicle configured to travel on or across any terrain or surface. The vehicle is preferably a motorized vehicle which may include at least one motor, e.g., an electric motor and/or an internal combustion engine, configured to drive the vehicle.

The system may be installed or installable at one or more wheels of the vehicle. The system may be installed or installable at each wheel of the vehicle. The system may be configured to control the ride height at each wheel and/or each axle of the vehicle, preferably individually. The system may be configured to control the ride height at each wheel and/or each axle of the vehicle at least partially simultaneously and/or sequentially.

The system may include at least one first ride height setting device. The first ride height setting device may be configured to adjust the ride height of the vehicle, in particular by applying at least one first force to at least a first section of the vehicle at at least one wheel of the vehicle.

The system may include at least one second ride height setting device. The second ride height setting device may be configured to at least partially maintain the ride height set by the first ride height setting device, in particular by applying at least one second force to the first section of the vehicle.

In other words, the system may include at least two ride height setting devices, i.e., the first height setting device and the second height setting device, which are each configured to apply a force, i.e., the first force and the second force, to a section of the vehicle at the same wheel or wheels to adjust and maintain, respectively, the ride height of the vehicle at that wheel or those wheels. This may allow the ride height setting devices to be configured more specifically and/or more optimally for the respective function of the respective ride height setting device, i.e., for adjusting the ride height by the first ride height setting device and maintaining the set ride height by the second ride height setting device. For instance, this may allow the first ride height setting device to be configured to adjust, i.e., increase or decrease, the vehicle's ride height relatively quickly, e.g., via a hydraulically driven actuator, whereas the second ride height setting device may be configured to maintain the ride height set by the first ride height setting device in a relatively energy efficient manner, e.g., via a pneumatically driven actuator, which may allow the ride height of the vehicle to be adjusted and maintained for an essentially unlimited period of time to allow for easier entry into and/or easier exit out of the vehicle.

This may improve the convenience, user-friendliness, functionality, and/or energy efficiency of the system compared with systems known from the prior art. Further, this may eliminate the drawback of employing two controllers which may negatively influence each other during operation, in contrast to at least some of the systems known from the prior art.

The first force and/or the second force may be applied or appliable to the first section directly, i.e., via direct contact with the first section, and/or indirectly, e.g., via one or more intermediate components.

The first ride height setting device and the second ride height setting device may be arranged in sequence or in parallel.

The first force and/or the second force may be configured to carry or support at least a portion of the load/weight of the vehicle. In other words, the first force and/or the second force may be directed substantially opposite to a direction in which the vehicle's load/weight is directed.

The system may be configured to adjust a ratio between the first force and the second force. In other words, the system may be configured to adjust a ratio between a load of the vehicle which is carried or supported by the first ride height setting device and a load of the vehicle which is carried or supported by the second ride height setting device. Configuring the system to allow the ratio between the first force and the second force to be adjusted may allow the load carried by the first ride height setting device and the second ride height setting device, via the first force and the second force, respectively, to be adjusted, e.g., to employ the first ride height setting device and the second ride height setting device in varying degrees/extents according to their strengths and/or weaknesses. For instance, the first ride height setting device may be configured to adjust, in particular increase, the ride height relatively quickly, whereas the second ride height setting device may be configured to maintain the ride height set by the first ride height setting device in a relatively energy efficient manner. Hence, the first force may be decreased and/or the second force may be increased, once a target ride height has been set/adjusted, partially or preferably completely, by the first ride height setting, gradually or step-wise so that the load carried by the second ride height setting device may be increased, gradually or step-wise, and the load carried by the first ride height setting device may be decreased, gradually or step-wise, in particular once the target ride height has been set/adjusted.

In other words, the system may be configured to "fade" or adjust a degree or extent of operation and/or a percentage of the vehicle's load being carried or supported by the respective ride height setting device. In other words, the function of supporting the vehicle is handed over from the first ride height setting device to the second ride height setting device, in particular once the ride height has been set/adjusted, partially or preferably completely, by the first ride height setting, and/or vice versa.

The second force may at least partially, preferably completely, replace the first force, once the ride height has been set/adjusted, partially or preferably completely, by the first ride height setting.

The term "ride height", within the context of the present disclosure, refers to a position of a frame or chassis of the vehicle relative to the respective wheel and/or the ground. The term "ride height" is not restricted to the height of the vehicle only during "riding", i.e., during driving/travelling. In other words, the term "ride height" refers to the height of the vehicle in general, including when the vehicle is not driving/travelling.

"Adjusting" the ride height, within the context of the present disclosure, means to increase and/or decrease the ride height.

The "section" of the vehicle, within the context of the present disclosure, i.e., the section of the vehicle to which the first force and the second force are applied, may be any section of the vehicle, in particular a section of a chassis or frame of the vehicle, to which the respective force may be applied to adjust and maintain the ride height, respectively. The "section" of the vehicle may be a section of the vehicle which is arranged above and/or adjacent to the wheel at which the ride height is to be adjusted/maintained.

The system may include a plurality of the first ride height setting device and/or a plurality of the second ride height setting device.

The system may include one or more sensors, including one or more of the following: a temperature sensor, a position sensor, a current sensor, a voltage sensor and a torque/force sensor. The one or more sensors may aid in controlling the vehicle's ride heigh, e.g., by providing a feedback loop, e.g., to a controller.

The system may be configured to adjust, in particular increase, the ride height of the vehicle by at least 5 cm, preferably at least 7.5 cm, more preferably at least 10 cm, more preferably at least 12.5 cm, more preferably at least 15 cm, more preferably at least 17.5 cm, more preferably at least 20 cm, more preferably at least 22.5 cm, more preferably at least 25 cm, more preferably at least 27.5 cm, more preferably at least 30 cm. The system may be configured to maintain, by the second ride height setting device, the ride height, after the ride height has been adjusted, in particular increased, by any of the above-identified values.

The system, more specifically the first ride height setting device, may be configured to adjust, i.e., increase and/or decrease, the ride height of the vehicle to one or more target ride heights, preferably one or more predetermined target ride heights. The target ride height(s) may be adjusted individually, in particular continuously and/or in a step-wise manner, by a user. Alternatively, or additionally, one or more predetermined target ride heights may be stored, e.g., in a memory, which the user may select, e.g., via at least one user input device.

Preferably, the system is configured to increase the second force and decrease the first force sequentially, and/or alternately and/or simultaneously, in particular once the ride height has been set by the first ride height setting device.

Preferably, the system is configured to increase the second force and decrease the first force to substantially zero or near zero, in particular once the ride height has been set by the first ride height setting device. This may allow the second force to substantially replace the first force, once the target ride height has been set/adjusted. In other words, the vehicle's load at the first section of the vehicle may be carried/supported substantially by the second ride height setting device, once the ride height has been set/adjusted by the first ride height setting. This may allow the second ride height setting device to be configured more specifically for the function of maintaining the vehicle's ride height, e.g., by maintaining the vehicle's ride in a relatively energy efficient manner, whereas the first ride height setting device may be configured more specifically for the function of adjusting, in particular increasing, the vehicle's ride height, e.g., by increasing and/or decreasing the vehicle's ride height relatively quickly.

Preferably, the system is configured to adjust the ride height, and optionally maintain the adjusted ride height, of the vehicle, simultaneously and/or sequentially, at at least two wheels, preferably at least two wheels of an axle of the vehicle, preferably at least two wheels of at least two axles of the vehicle, preferably at at least four wheels, preferably at least four wheels of at least two axles of the vehicle, preferably at a plurality of axles of the vehicle. As discussed at the beginning, the systems known from the prior art are limited in their ability to adjust the respective vehicle's ride height at multiple locations, in particular at multiple axles. Hence, the system described herein may provide greater flexibility and/or improved functionality by enabling the ride height of the vehicle to be adjusted at multiple locations, in particular at a plurality of axles, of the vehicle.

Preferably, the system is configured to adjust the ride height of the vehicle by the first ride height setting device and maintain the adjusted ride height by the second ride height setting device at a plurality of axles of the vehicle at least partially simultaneously, i.e., the vehicle may be moved up and/or down on a plurality of axles, e.g., a front axle and a rear axle, at the same time. This may increase the comfort and/or convenience of the user and/or the passengers of the vehicle, e.g., by preventing "cameling" of the vehicle, i.e., in which the front or rear of the vehicle moves up or down and the other of the front or rear of the vehicle does not move up or down.

Alternatively, or additionally, the system may be configured to adjust the ride height of the vehicle by the first ride height setting device and maintain the adjusted ride height by the second ride height setting device one axle, e.g., only at the front axle or the rear axle, at a time. This may achieve a specific function or target, e.g., connecting a trailer hook at the rear of the vehicle, e.g., to a trailer, in a relatively efficient manner, in particular compared with adjusting the ride height at all axles.

In order to adjust the ride height, and optionally maintain the adjusted ride height, of the vehicle, simultaneously and/or sequentially, at at least two locations, preferably at at least two wheels and/or at a plurality of axles, the system may include a plurality of the first ride height setting device, and optionally a plurality of the second ride height setting device. Each respective location at which the ride height is to be adjusted, and optionally maintained, may include at least one of the first ride height setting devices, and optionally at least one of the second ride height setting devices.

Preferably, the system is configured to adjust the ride height, and optionally maintain the adjusted ride height, of the vehicle while the vehicle is driving, e.g., to provide offroad traction support, and/or while the vehicle is stationary, e.g., to facilitate entry into and/or exit out of the vehicle. The term "stationary" refers to a state in which the vehicle is not moving forward, backwards, or sideways. The vehicle may move up and down, i.e., due to a ride height adjustment, when the vehicle is stationary.

Preferably, the system includes at least one source of fluid, preferably at least one source of liquid, preferably oil, and/or at least one source of gas, preferably air, preferably at least one source of compressed gas or air, configured to supply the fluid to the first ride height setting device and/or the second ride height setting device to generate and/or adjust the first force and/or the second force, respectively. Preferably, the system is configured to supply the fluid, preferably oil, from the source of fluid to the first ride height setting device and to supply the gas, preferably air, preferably compressed air, from the source of gas to the second ride height setting device. Hence, the first ride height setting device may be hydraulically actuated and the second ride height setting device may be pneumatically actuated.

The "source of gas" may be a compressor and/or a reservoir, e.g., of compressed gas/air.

The first ride height setting device may be or include at least one damping device.

The second ride height setting device may be or include at least one air spring strut.

Preferably, the system is configured to:
generate a signal to control the second force, wherein the signal is preferably dependent from and/or proportional to at least parameter, preferably at least one operating parameter, of the first ride height setting device;
   and/or
generate a signal to control the first force, wherein the signal is preferably dependent from and/or proportional to at least parameter, preferably at least one operating parameter, of the second ride height setting device.

In other words, the first ride height setting device may be controlled dependently from the second ride height setting device and/or vice versa. This may allow a ratio or percentage of the load of the vehicle carried by the first ride height setting device and the second ride height setting device to be adjusted more precisely and/or reliably.

The operating parameter may include one or more of the following: at least one force generated and/or applied by the respective height setting device, at least one motor torque of the respective height setting device, and at least one motor current of the respective height setting device.

Alternatively, or additionally, the system may be configured to:
generate a signal to control and/or adjust the first force based at least partially on at least one environmental parameter and/or a location of the vehicle;
   and/or
generate a signal to control and/or adjust the second force based at least partially on at least one environmental parameter and/or a location of the vehicle.

An "environmental parameter" is understood as any parameter associated with an environment of the system and/or the vehicle. The environmental parameter may include one or more of the following: at least one temperature, at least one pressure, and at least one road condition. The location of the vehicle may be determined by GPS.

Preferably, the second ride height setting device is configured to maintain the ride height for at least 5 seconds, preferably at least 10 seconds, more preferably at least 15 seconds, more preferably at least 20 seconds, more preferably at least 25 seconds, more preferably at least 30 seconds, more preferably at least 35 seconds, more preferably at least 40 seconds, more preferably at least 45 seconds, more preferably at least 50 seconds, more preferably at least 55 seconds, more preferably at least 60 seconds, more preferably at least 90 seconds, more preferably at least 120 seconds. As discussed at the beginning, the systems known from the prior art are configured to maintain an increased ride height for a limited time, in particular a relatively short time, only. By contrast, the system described herein may allow the ride height of the vehicle to be adjusted and maintained for a relatively long period of time, in particular for an essentially unlimited amount of time.

The system may be configured such that the first ride height setting device contributes to maintaining the ride height, i.e., to assist the second ride height setting device.

However, preferably, the system is configured such that:
the first ride height setting device does not contribute to maintaining the ride height set by the first ride height setting device;
   and/or
the ride height set by the first ride height setting device is maintained only by the second ride height setting device.

Hence, the function of maintaining the ride height of the vehicle, at least when the vehicle is at an elevated ride height, may be performed solely by the first ride height setting device. Preferably, the first force applied by the first ride height setting device is reduced, preferably to substantially zero, after or once the second ride height setting device has taken over the ride height maintaining function.

Alternatively, or additionally, the system may be configured such that the second ride height setting device contributes to adjusting the ride height of the vehicle, i.e., to assist the first ride height setting device.

Preferably, the system includes at least one controller, preferably at least one closed loop controller, configured to generate one or more signals to adjust the ratio of the first force and the second force.

Preferably, the system is configured to adjust the ratio between the first force and the second force such that a load of the vehicle which is carried by the second ride height setting device is gradually increased and the load of the vehicle which is carried by the first ride height setting device is gradually decreased, in particular once the ride height has been set by the first ride height setting device.

Preferably, the system is configured:
to adjust the first force by adjusting a pressure, preferably a fluid pressure, preferably an oil pressure, and/or a mass or volume of fluid, preferably a mass or volume of a gas, preferably air, within at least a section of the first ride height setting device;
   and/or
to adjust the second force by adjusting a pressure, preferably a fluid pressure, preferably an oil pressure, and/or a mass or volume of fluid, preferably a mass or volume of a gas, preferably air, within at least a section of the second ride height setting device.

Preferably, the first ride height setting device is configured as and/or includes a hydraulic actuator configured to generate the first force and the second ride height setting device is configured as and/or includes a pneumatic actuator, preferably an air spring, configured to generate the second force. A hydraulic actuator may, as an example, provide a relatively fast adjustment, in particular increase, in the ride height, whereas a pneumatic actuator may, as an example, provide a relatively energy efficient means for maintaining the adjusted ride height.

Preferably, the first ride height setting device is part of an active suspension system, preferably a fully active suspension system, FAS. An active suspension system is understood as a type of automotive suspension that uses an onboard control system to control the vertical movement of a vehicle's wheels and axles relative to the chassis or vehicle frame, rather than the conventional passive suspension that relies solely on relatively large springs to maintain static support and dampen vertical wheel movements caused by a road surface.

Preferably, the second ride height setting device is part of an air spring system.

The first ride height setting device and the second ride height setting device may be combined, e.g., as an air spring strut. The first ride height setting device may be arranged at least partially within the second ride height setting device or vice versa. This may provide a relatively compact system.

Preferably, the first ride height setting device and the second ride height setting device are configured to apply the first force and the second force, respectively, to at least a first section of the vehicle at at least one first wheel of a first axle of the vehicle to adjust the right height at the first wheel, wherein the system further includes at least one third ride height setting device configured to apply at least one third force to at least a second section of the vehicle at at least one second wheel of a second axle of the vehicle to adjust the right height at the second wheel and at least one fourth ride height setting device configured to apply at least one fourth force to the second section of the vehicle to at least partially maintain the ride height set by the third ride height setting device, wherein the system is configured to adjust a first ratio between the first force and the second force and a second ratio between the third force and the fourth force.

Preferably, the system is configured to adjust the first ratio and the second ratio at least partially simultaneously.

Preferably, the system is configured to adjust the first ratio and the second ratio at least partially in a time-shifted manner and/or sequentially.

Preferably, the system is configured to:
increase the first force by increasing a fill level and/or a volume and/or a mass of a liquid, preferably oil, in at least a section of the first ride height setting device;
   and/or
decrease the first force by reducing a fill level and/or a volume and/or a mass of a liquid, preferably oil, in at least a section of the first ride height setting device.

Preferably, the system is configured to:
increase the second force by increasing a fill level and/or a volume and/or a mass of a fluid, preferably at least one gas, preferably air, in at least a section of the second ride height setting device;
   and/or
decrease the second force by reducing a fill level and/or a volume and/or a mass of a fluid, preferably at least one gas, preferably air, in at least a section of the second ride height setting device.

Preferably, the system is configured to maintain a substantially constant fill level and/or a volume and/or a mass of the fluid, or reduce the fill level and/or a volume and/or a mass of the fluid, in the second ride height setting device, while the ride height of the vehicle is being increased by the first ride height setting device. In other words, the second ride height setting device may not be adjusted while the ride height of the vehicle is being increased by the first ride height setting device and/or prior to reaching a target ride height.

The present disclosure also relates to a vehicle which includes one or more wheels and the system according to any of the embodiments described herein. The features, configurations, and advantages, as described above with respect to the system, apply to the vehicle accordingly.

The objection mentioned at the beginning is also solved by a method of controlling a ride height of a vehicle which has one or more wheels, preferably by operating the system according to any of the embodiments described herein. The features, configurations, and advantages, as described above with respect to the system, apply to the method accordingly.

The method may include:
adjusting the ride height of the vehicle by applying, by means of at least one first ride height setting device, at least one first force to at least a first section of the vehicle at at least one wheel of the vehicle.

The method may include:
at least partially maintaining the ride height set by the first ride height setting device by applying, by means of at least one second ride height setting device, at least one second force to the first section of the vehicle.

The method may include:
adjusting a ratio between the first force and the second force.

The objection mentioned at the beginning is also solved by a control unit for controlling a ride height of a vehicle, preferably a vehicle which has one or more wheels. The features, configurations, and advantages, as described above with respect to the system, apply to the control unit accordingly.

The control unit may be configured to:
provide a first signal to at least one first ride height setting device to trigger the first ride height setting device to adjust the ride height of the vehicle by applying at least one first force to at least a first section of the vehicle at at least one wheel of the vehicle.

The control unit may be configured to:
provide a second signal to at least one second ride height setting device to trigger the second ride height setting device to at least partially maintain the ride height set by the first ride height setting device by applying at least one second force to the first section of the vehicle.

The control unit may be configured to:
adjust a ratio between the first force and the second force.

The control unit may include one or more controllers, e.g., a controller for controlling the first ride height setting device and a controller for controlling the second ride height setting device.

Various exemplary embodiments of the present disclosure disclosed herein are directed to providing features that will become readily apparent by reference to the following description when taken in conjunction with the accompanying drawings. In accordance with various embodiments, exemplary devices are disclosed herein. It is understood, however, that these embodiments are presented by way of example and not limitation, and it will be apparent to those of ordinary skill in the art who read the present disclosure that various modifications to the disclosed embodiments can be made while remaining within the scope of the present disclosure.

Thus, the present disclosure is not limited to the exemplary embodiments and applications described and illustrated herein. Additionally, the specific order and/or hierarchy of steps in the methods disclosed herein are merely exemplary approaches. Based upon design preferences, the specific order or hierarchy of steps of the disclosed methods or processes can be re-arranged while remaining within the scope of the present disclosure. Thus, those of ordinary skill in the art will understand that the methods and techniques disclosed herein present various steps or acts in a sample order, and the present disclosure is not limited to the specific order or hierarchy presented unless expressly stated otherwise.

The following list of aspects provides alternative and/or further features of the invention:
1. A system for controlling a ride height of a vehicle, preferably a vehicle which has one or more wheels, the system including:
   at least one first ride height setting device configured to adjust the ride height of the vehicle, preferably at at least one wheel of the vehicle, preferably by applying, by means of the first ride height setting device, at least one first force to at least a first section of the vehicle at at least one wheel of the vehicle;
   at least one second ride height setting device configured to at least partially maintain the ride height set by the first ride height setting device, preferably by applying, by means of the second ride height setting device, at least one second force to the first section of the vehicle;
   preferably wherein the system is configured to adjust a ratio between the first force and the second force.
2. The system according to aspect 1, wherein the system is configured to increase the second force and decrease the first force sequentially, and/or alternately or simultaneously, in particular once the ride height has been set by the first ride height setting device.
3. The system according to any of the preceding aspects, wherein the system is configured to increase the second force and decrease the first force to substantially zero or near zero, in particular once the ride height has been set by the first ride height setting device.
4. The system according to any of the preceding aspects, wherein the system is configured to adjust the ride height, and optionally maintain the adjusted ride height, of the vehicle, simultaneously and/or sequentially, at at least two wheels, preferably at least two wheels of an axle of the vehicle, preferably at least two wheels of at least two axles of the vehicle, preferably at at least four wheels, preferably at least four wheels of at least two axles of the vehicle.
5. The system according to any of the preceding aspects, wherein the system is configured to adjust the ride height, and optionally maintain the adjusted ride height, of the vehicle while the vehicle is driving and/or while the vehicle is stationary.
6. The system according to any of the preceding aspects, further including at least one source of fluid, preferably at least one source of liquid, preferably oil, and/or at least one source of air, preferably at least one source of compressed air, configured to supply the fluid to the first ride height setting device and/or the second ride height setting device to generate and/or adjust the first force and/or the second force, respectively.
7. The system according to any of the preceding aspects, wherein the system is configured to:
   generate a signal to control the second force, wherein the signal is preferably dependent from and/or proportional to at least parameter, preferably at least one operating parameter, of the first ride height setting device;
      and/or
   generate a signal to control the first force, wherein the signal is preferably dependent from and/or proportional to at least parameter, preferably at least one operating parameter, of the second ride height setting device.
8. The system according to any of the preceding aspects, wherein the second ride height setting device is configured to maintain the ride height for at least 5 seconds, preferably at least 10 seconds, more preferably at least 15 seconds, more preferably at least 20 seconds, more preferably at least 25 seconds, more preferably at least 30 seconds, more preferably at least 35 seconds, more preferably at least 40 seconds, more preferably at least 45 seconds, more preferably at least 50 seconds, more preferably at least 55 seconds, more preferably at least 60 seconds, more preferably at least 90 seconds, more preferably at least 120 seconds.
9. The system according to any of the preceding aspects, wherein the system is configured such that:
   the first ride height setting device does not contribute to maintaining the ride height set by the first ride height setting device;
      and/or
   the ride height set by the first ride height setting device is maintained only by the second ride height setting device.
10. The system according to any of the preceding aspects, wherein the system includes at least one controller, preferably at least one closed loop controller, configured to generate one or more signals to adjust the ratio of the first force and the second force.
11. The system according to any of the preceding aspects, wherein the system is configured to adjust the ratio between the first force and the second force such that a load of the vehicle which is carried by the second ride height setting device is gradually increased and the load of the vehicle which is carried by the first ride height setting device is gradually decreased, in particular once the ride height has been set by the first ride height setting device.
12. The system according to any of the preceding aspects, wherein the system is configured:
   to adjust a pressure, preferably a fluid pressure, preferably an oil pressure, and/or a mass or volume of fluid, preferably a mass or volume of a gas, preferably air, within at least a section of the first ride height setting device;
      and/or
   to adjust a pressure, preferably a fluid pressure, preferably an oil pressure, and/or a mass or volume of fluid, preferably a mass or volume of a gas, preferably air, within at least a section of the second ride height setting device.
13. The system according to any of the preceding aspects, wherein the first ride height setting device is configured as and/or includes a hydraulic actuator configured to generate the first force and the second ride height setting device is configured as and/or includes a pneumatic actuator, preferably an air spring, configured to generate the second force.
14. The system according to any of the preceding aspects, wherein the first ride height setting device is part of an active suspension system, preferably a fully active suspension system, FAS.
15. The system according to any of the preceding aspects, wherein the second ride height setting device is part of an air spring system.
16. The system according to any of the preceding aspects, wherein the first ride height setting device and the second ride height setting device are configured to apply the first force and the second force, respectively, to at least a first section of the vehicle at at least one first wheel of a first axle of the vehicle to adjust the right height at the first wheel, wherein the system further includes at least one third ride height setting device configured to apply at least one third force to at least a second section of the vehicle at at least one second wheel of a second axle of the vehicle to adjust the right height at the second wheel and at least one fourth ride height setting device configured to apply at least one fourth force to the second section of the vehicle to at least partially maintain the ride height set by the third ride height setting device, wherein the system is configured to adjust a first ratio between the first force and the second force and a second ratio between the third force and the fourth force.
17. The system according to aspect 16, wherein the system is configured to adjust the first ratio and the second ratio at least partially simultaneously.
18. The system according to aspect 16 or 17, wherein the system is configured to adjust the first ratio and the second ratio at least partially in a time-shifted manner and/or sequentially.
19. The system according to any of the preceding aspects, wherein the system is configured to:
   increase the first force by increasing a fill level and/or a volume and/or a mass of a liquid, preferably oil, in at least a section of the first ride height setting device;
      and/or
   decrease the first force by reducing a fill level and/or a volume and/or a mass of a liquid, preferably oil, in at least a section of the first ride height setting device.
20. The system according to any of the preceding aspects, wherein the system is configured to:
   increase the second force by increasing a fill level and/or a volume and/or a mass of a fluid, preferably at least one gas, preferably air, in at least a section of the second ride height setting device;
      and/or
   decrease the second force by reducing a fill level and/or a volume and/or a mass of a fluid, preferably at least one gas, preferably air, in at least a section of the second ride height setting device.
21. The system according to any of the preceding aspects, wherein the system is configured to maintain a substantially constant fill level and/or a volume and/or a mass of the fluid, or reduce the fill level and/or a volume and/or a mass of the fluid, in the second ride height setting device, while the ride height of the vehicle is being increased by the first ride height setting device.
22. A vehicle which includes at least one system according to any of the preceding aspects, preferably wherein the vehicle includes one or more wheels.
23. A method of controlling a ride height of a vehicle, preferably a vehicle which has one or more wheels, preferably by operating the system according to any of aspects 1 to 21, the method including:
   adjusting the ride height of the vehicle by means of at least one first ride height setting device, preferably at at least one wheel of the vehicle, preferably by applying, by means of the at least one first ride height setting device, at least one first force to at least a first section of the vehicle at at least one wheel of the vehicle;
   at least partially maintaining the ride height set by the first ride height setting device by means of at least one second ride height setting device, preferably by applying, by means of the at least one second ride height setting device, at least one second force to the first section of the vehicle;
   adjusting a ratio between the first force and the second force.
24. A control unit for controlling a ride height of a vehicle, preferably a vehicle which has one or more wheels, the control unit being configured to:
   provide a first signal to at least one first ride height setting device to trigger the first ride height setting device to adjust the ride height of the vehicle, preferably by applying, by means of the first ride height setting device, at least one first force to at least a first section of the vehicle, preferably at at least one wheel of the vehicle;
   provide a second signal to at least one second ride height setting device to trigger the second ride height setting device to at least partially maintain the ride height set by the first ride height setting device, preferably by applying, by means of the second ride height setting device, at least one second force to the first section of the vehicle;
   adjust a ratio between the first force and the second force.

Embodiments of the present invention are further elucidated below with reference to the figures. The figures are schematic drawings and as such may not show all details of the systems and their components. Particularly, the drawings are not necessarily to scale and the shown dimensions are only exemplary and may vary. The drawings illustrate exemplary embodiments to provide a thorough understanding of the present invention. The drawings are not intended to limit the scope of the invention, which is defined by the appended claims and is to include the equivalents thereof.
- Fig. 1: shows, in a schematic view, a system for controlling a ride height of a vehicle according to an embodiment of the present disclosure;
- Fig. 2: shows, in a schematic view, the system of Fig. 1 in which the ride height of the vehicle has been increased;
- Figs. 3 and 4: show, in schematic views, the system of Figs. 1 and 2 in which a load of the vehicle is transferred from the first ride height setting device to the second ride height setting device;
- Fig. 5: shows, in a schematic view, a system for controlling a ride height of a vehicle according to an embodiment of the present disclosure;
- Fig. 6: shows graphs of operating parameters of any of the systems of Figs. 1 to 5;
- Fig. 7: shows a vehicle according to an embodiment of the present disclosure which includes a system for controlling a ride height.

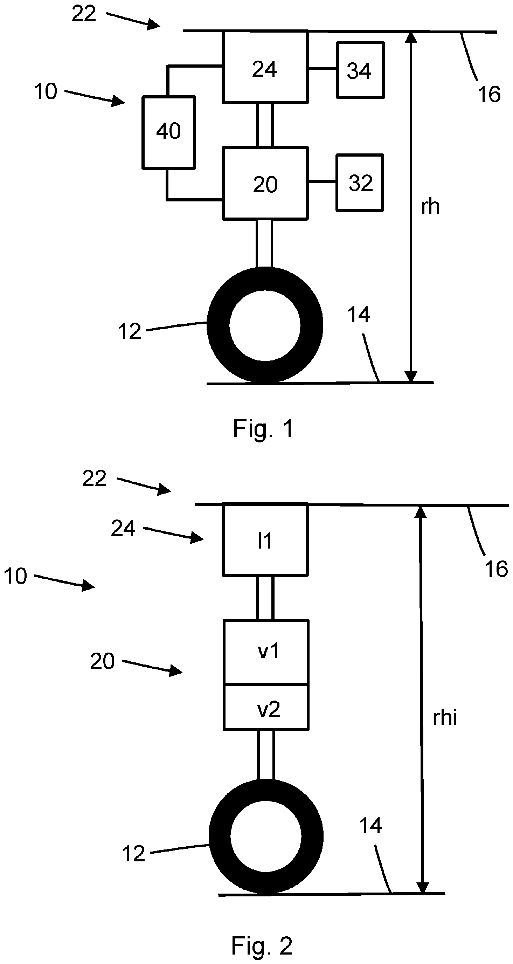

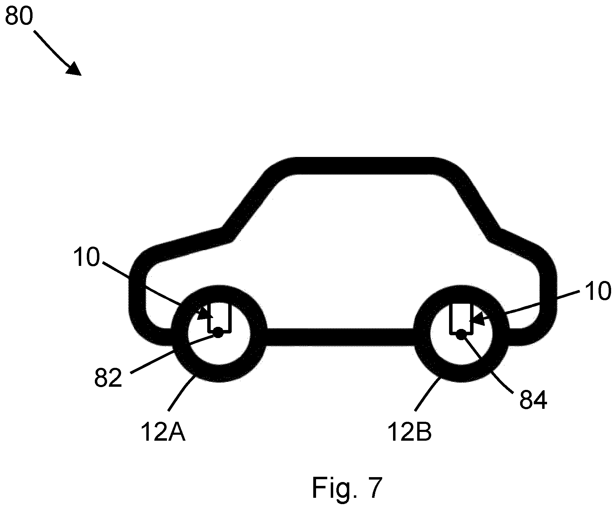

Fig. 1 shows a system 10 for controlling a ride height rh of a vehicle (see the vehicle in Fig. 7 which is discussed in further detail below) which has one or more wheels 12. Fig. 1 shows only a single wheel 12 for exemplary purposes. The wheel 12 is supported by a ground 14 on which the vehicle may travel. As shown in Fig. 1, the ride height rh may be determined based on a position of a frame or chassis 16 of the vehicle relative to the ground 14. Alternatively, the ride height rh may be determined based on a position of a frame or chassis 16 of the vehicle relative to the wheel 12.

The system 10 may include at least one first ride height setting device 20 configured to adjust the ride height rh of the vehicle by applying at least one first force to at least a first section 22 of the vehicle at the wheel 12 of the vehicle. The first section 22 may be a section of the frame or chassis 16 of the vehicle.

The system 10 may include at least one second ride height setting device 24 configured to at least partially maintain the ride height rh set, i.e., increased or decreased, by the first ride height setting device 20 by applying at least one second force to the first section 22 of the vehicle. The system 10 may be configured to adjust a ratio between the first force and the second force.

The first ride height setting device 20 and the second ride height setting device 24 are shown in Fig. 1, in a schematic manner, as being arranged in series. However, alternatively, the first ride height setting device 20 and the second ride height setting device 24 may be arranged in parallel.

The system 10 may be configured to increase the second force and decrease the first force sequentially, and/or alternately or simultaneously, in particular once the ride height rh has been set, i.e., increased or decreased, by the first ride height setting device 20.

The system 10 may be configured to increase the second force and decrease the first force to substantially zero or near zero, in particular once the ride height rh has been set, i.e., increased or decreased, by the first ride height setting device 20.

The system 10 may be configured to adjust the ride height rh, and optionally maintain the adjusted ride height rh, of the vehicle, simultaneously and/or sequentially, at at least two wheels, preferably at least two wheels of an axle of the vehicle, preferably at least two wheels of at least two axles of the vehicle, preferably at at least four wheels, preferably at least four wheels of at least two axles of the vehicle.

The system 10 may be configured to adjust the ride height rh, and optionally maintain the adjusted ride height rh, of the vehicle while the vehicle is driving and/or while the vehicle is stationary.

At least one first source of fluid 32 may also be provided. The first source 32 may be a source of liquid, preferably oil. The first source of fluid 32 may be configured to supply the fluid/liquid to the first ride height setting device 20 to generate and/or adjust the first force.

At least one second source of fluid 34 may also be provided. The second source 34 may be a source of gas, preferably at least one source of compressed gas, preferably at least one source of air, preferably at least one source of compressed air. The second source of fluid 34 may be configured to supply the gas/air to the second ride height setting device 24 to generate and/or adjust the second force.

The sources 32, 34 may be included in the system 10. Alternatively, the sources 32, 34 may be considered to be separate components, i.e., not a part of the system 10.

The system 10 may include at least one controller 40, preferably at least one closed loop controller. The controller 40 may be configured to generate one or more signals to adjust the ratio of the first force and the second force. The controller 40 may be operatively connected to the first ride height setting device 20 and/or the second ride height setting device 24 to provide one or more signals to the first ride height setting device 20 and/or the second ride height setting device 24, respectively.

The system 10 may be configured to:
generate a signal, preferably by means of the controller 40, to control the second force. The signal may be dependent from and/or proportional to at least parameter, preferably at least one operating parameter, of the first ride height setting device 20.

Alternatively, or additionally, the system 10 may be configured to generate a signal, preferably by means of the controller 40, to control the first force. The signal may be dependent from and/or proportional to at least parameter, preferably at least one operating parameter, of the second ride height setting device 24.

The system 10 may be configured such that the first ride height setting device 20 does not contribute to maintaining the ride height rh set by the first ride height setting device 20.

Alternatively, or additionally, the system 10 may be configured such that the ride height rh set, i.e., increased or decreased, by the first ride height setting device 20 is maintained only by the second ride height setting device 24.

The system 10 is also schematically shown in Fig. 2. Some of the components of the system 10 have been omitted from the illustration in Fig. 2 for the sake of clarity. The components shown in Fig. 1 may also be included in the system 10 of Fig. 2. Compared with the illustration in Fig. 1, the system 10 of Fig. 2 has been operated such that the ride height rh has been increased to rhi by actuating the first ride height setting device 20. In particular, the first ride height setting device 20 may be actuated to increase or decrease the ride height rh by filling a volume of the first ride height setting device 20, or increasing a filling of a volume of the first ride height setting device 20, e.g., by supplying the liquid, e.g., oil, from the first source of fluid 32, as indicated schematically by the increased size of the first ride height setting device 20 in Fig. 2 compared with Fig. 1. For instance, as shown in Fig. 2, the first ride height setting device 20 may have a volume v1 which may be filled with liquid, e.g., oil. The volume v1 may correspond to the volume of the first ride height setting device 20 which is filled with liquid, e.g., oil, in Fig. 1. An additional volume v2 may be filled with liquid, e.g., oil, such that the total volume within the first ride height setting device 20 which is filled with liquid, e.g., oil, may be a sum of v1 and v2.

This may allow a volume of the first ride height setting device 20 to be increased, e.g., expanded, to increase a distance between the frame or chassis 16 of the vehicle and the ground 14, thus increasing the ride height rh to the ride height rh1.

The ride height rh1 may be a target ride height, e.g., to facilitate entry into and/or out of the vehicle.

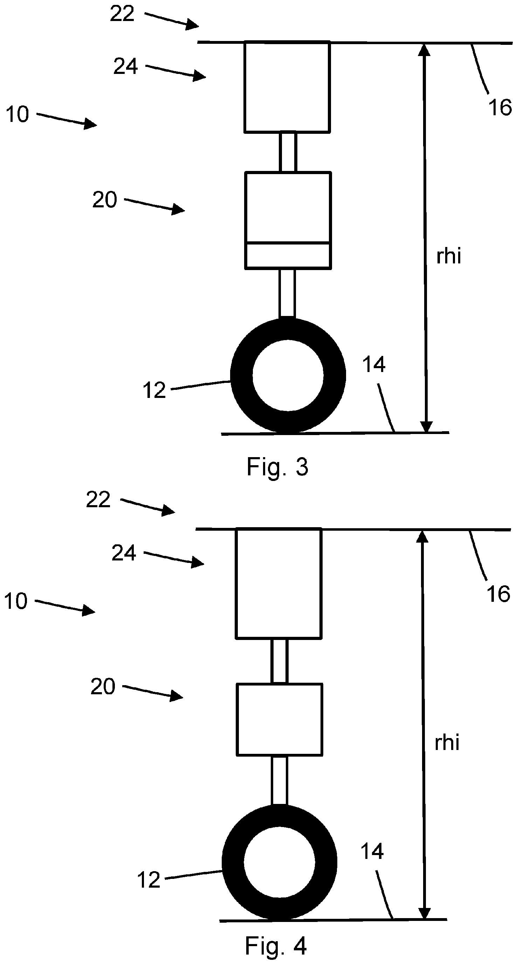

As shown in Figs. 3 and 4, a load of the vehicle which is carried/supported by the first ride height setting device 20 may be transferred, partially or completely, to the second ride height setting device 24, once the ride height rh1 has been set by the first ride height setting device 20.

In particular, as shown in Fig. 3, the second ride height setting device 24 may be actuated, e.g., by filling a volume of the second ride height setting device 24, or increasing a filling of a volume of the second ride height setting device 24, by supplying the gas from the second source of fluid 34. This may allow a volume of the second ride height setting device 24 to be increased, e.g., expanded, as indicated schematically by the increased size of the second ride height setting device 24 in Fig. 3 compared with Figs. 1 and 2.

Once the second ride height setting device 24 has been actuated, e.g., by filling a volume of the second ride height setting device 24, or increasing a filling of a volume of the second ride height setting device 24, the load of the vehicle which is carried by the first ride height setting device 20 may be reduced, as shown in Fig. 4. For instance, a volume of the first ride height setting device 20 may be reduced, as indicated by the reduced size of the first ride height setting device 20 in Fig. 4 compared with Figs. 2 and 3.

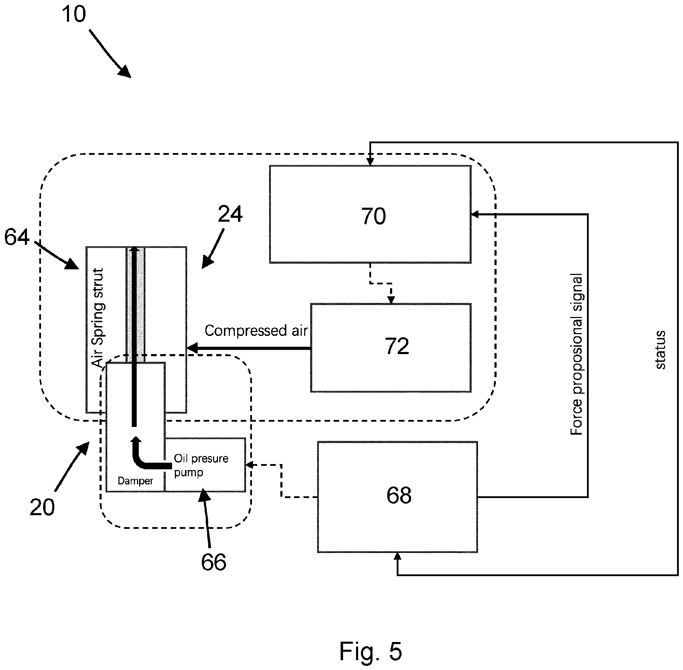

Fig. 5 shows a system 10 for controlling a ride height of a vehicle which may be similar to or identical with the system 10 of Figs. 1 to 4. As shown in Fig. 5, the first ride height setting device 20 may be configured as a strut or damper and/or the second ride height setting device 24 may be configured as an air spring. The first ride height setting device 20 and the second ride height setting device 24 may be combined as an air spring strut 64.

The first ride height setting device 20 may be supplied with liquid, e.g., oil, via at least one oil pressure pump 66. The second ride height setting device 24 may be supplied with compressed air, e.g., from a source of gas/compressed air 72.

The system 10 may include a first controller 68 configured to generate one or more signals to control and/or actuate a supply of liquid, e.g., oil, to the first ride height setting device 20, e.g., by controlling and/or actuating operation of the oil pressure pump 66. The system 10 may include at least a second controller 70 configured to generate one or more signals to control and/or actuate a supply of gas, e.g., compressed air, to the second ride height setting device 24, e.g., by controlling and/or actuating the source of gas/compressed air 72. The system 10 may be configured to monitor a status, e.g., an operating status, (as indicated by the double-arrowed line and the associated term "status" in Fig. 5) of the first ride height setting device 20 and the second ride height setting device 24, e.g., by means of the first controller 68 and/or the second controller 70.

The first controller 68 and/or the second controller 70 may be configured to generate a signal to control, i.e., increase and/or decrease, the first force and/or the second force, respectively. The signal(s) may be dependent from and/or proportional to at least parameter, preferably at least one operating parameter and/or at least environmental parameter, of the first ride height setting device 20 and/or the second ride height setting device 24. For instance, the signal(s) may include a force proportional signal, e.g., a signal which is proportional to the first force and/or the second force. For instance, the second controller 70 may be configured to generate a signal to control and/or actuate the source of gas/compressed air 72 to fill the second ride height setting device 24 in order to increase the second force, the signal being proportional to the first force.

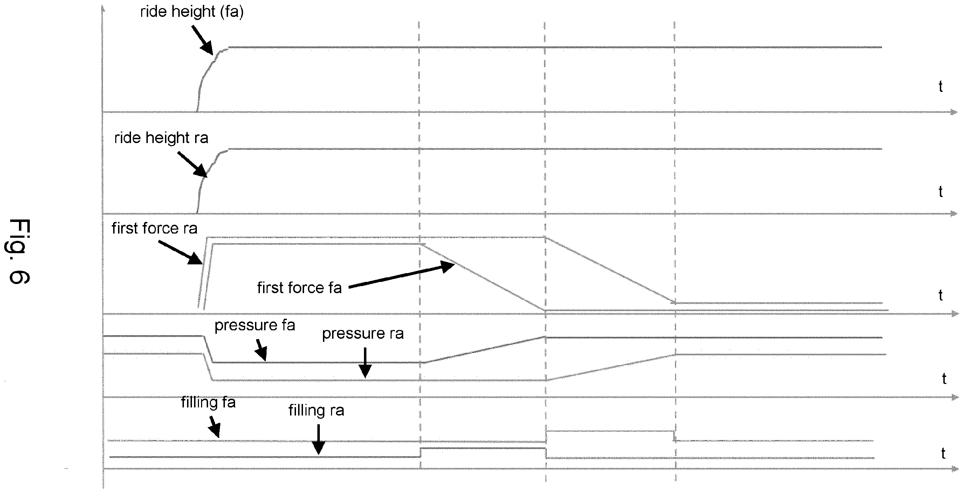

Fig. 6 shows various graphs of operating parameters of any of the systems 10 of Figs. 1 to 5. In particular, Fig. 6 shows the vehicle's ride height rh at the front axle ("fa") and the vehicle's ride height rh at the rear axle ("ra") over time t. The ride height rh may be adjusted, e.g., increased, substantially simultaneously or in a time-shifted manner at the front axle and the rear axle.

Fig. 6 further shows a graph of the first force, more particular an increase in the first force, generated by the first ride height setting device 20 at the front axle ("fa") and the rear axle ("ra") over time t to increase the ride height rh.

Fig. 6 further shows a graph of a pressure within a volume of the second ride height setting device 24 at the front axle ("fa") and the rear axle ("ra") over time t. As shown in Fig. 6, the pressure may be decreased due to an increase in the first force, e.g., due to an increase in the vehicle's load which is carried by the first ride height setting device 20, which may decrease a load being carried/supported by the second ride height setting device 24.

Fig. 6 also shows a graph of a filling of the second ride height setting device 24, e.g., a mass flow or volume flow of (compressed) gas/air from a source of (compressed) gas/air to the second ride height setting device 24, at the front axle ("fa") and the rear axle ("ra") over time t.

As shown in Fig. 6, the first force may be reduced, once a filling, and thus a pressure, within the second ride height setting device 24 has been increased to transfer at least a portion of the vehicle's load which is carried/supported by the first ride height setting device 20 to the second ride height setting device 24. This may allow the adjusted, e.g., increased, ride height rh to be maintained by the second ride height setting device 24, whereas the activity or function of the first ride height setting device 20 may be reduced, as indicated by the reduction of the first force to zero or near zero in Fig. 6. Once the pressure and the filling within the second ride height setting device 24 has been increased to a sufficient level to transfer the vehicle's load carried by the first ride height setting device 20 to the second ride height setting device 24, the mass flow or volume flow of (compressed) gas/air from the source of (compressed) gas/air may be reduced or stopped completely.

Fig. 7 shows a vehicle 80 which includes the system 10 for controlling a ride height of the vehicle 80. The vehicle 80 includes a front axle 82 with one or more front wheels 12A and a rear axle 84 with one or more rear wheels 12B. In particular, a plurality of systems 10 may be provided, each wheel 12A, 12B or each axle 82, 84 having its own system 10. Alternatively, a single system 10 may be provided, e.g., to increase the ride height at each wheel 12A, 12B or each axle 82, 84.

## Claims

1. A system (10) for controlling a ride height (rh) of a vehicle (80) which has one or more wheels (12), the system (10) including:
at least one first ride height setting device (20) configured to adjust the ride height (rh) of the vehicle by applying at least one first force to at least a first section (22) of the vehicle at at least one wheel (12) of the vehicle;
at least one second ride height setting device (24) configured to at least partially maintain the ride height (rh) set by the first ride height setting device (20) by applying at least one second force to the first section (22) of the vehicle;
wherein the system (10) is configured to adjust a ratio between the first force and the second force.

2. The system (10) according to claim 1, wherein the system (10) is configured to increase the second force and decrease the first force sequentially, and/or alternately or simultaneously, in particular once the ride height (rh) has been set by the first ride height setting device (20).

3. The system (10) according to any of the preceding claims, wherein the system (10) is configured to increase the second force and decrease the first force to substantially zero or near zero, in particular once the ride height (rh) has been set by the first ride height setting device (20).

4. The system (10) according to any of the preceding claims, wherein the system (10) is configured to adjust the ride height (rh), and optionally maintain the adjusted ride height (rh), of the vehicle, simultaneously and/or sequentially, at at least two wheels, preferably at least two wheels of an axle (82, 84) of the vehicle, preferably at least two wheels of at least two axles (82, 84) of the vehicle, preferably at at least four wheels, preferably at least four wheels of at least two axles (82, 84) of the vehicle.

5. The system (10) according to any of the preceding claims, wherein the system (10) is configured to adjust the ride height (rh), and optionally maintain the adjusted ride height (rh), of the vehicle while the vehicle is driving and/or while the vehicle is stationary.

6. The system (10) according to any of the preceding claims, further including at least one source of fluid (32, 34), preferably at least one source of liquid, preferably oil, and/or at least one source of gas, preferably at least one source of compressed gas, preferably at least one source of air, preferably at least one source of compressed air, configured to supply the fluid to the first ride height setting device (20) and/or the second ride height setting device (24) to generate and/or adjust the first force and/or the second force, respectively.

7. The system (10) according to any of the preceding claims, wherein the system (10) is configured to:
generate a signal to control the second force, wherein the signal is preferably dependent from and/or proportional to at least parameter, preferably at least one operating parameter, of the first ride height setting device (20);
and/or
generate a signal to control the first force, wherein the signal is preferably dependent from and/or proportional to at least parameter, preferably at least one operating parameter, of the second ride height setting device (24).

8. The system (10) according to any of the preceding claims, wherein the system (10) is configured such that:
the first ride height setting device (20) does not contribute to maintaining the ride height (rh) set by the first ride height setting device (20);
and/or
the ride height (rh) set by the first ride height setting device (20) is maintained only by the second ride height setting device (24).

9. The system (10) according to any of the preceding claims, wherein the system (10) includes at least one controller (40), preferably at least one closed loop controller, configured to generate one or more signals to adjust the ratio of the first force and the second force.

10. The system (10) according to any of the preceding claims, wherein the system (10) is configured to adjust the ratio between the first force and the second force such that a load of the vehicle which is carried by the second ride height setting device (24) is gradually increased and the load of the vehicle which is carried by the first ride height setting device (20) is gradually decreased, in particular once the ride height (rh) has been set by the first ride height setting device (20).

11. The system (10) according to any of the preceding claims, wherein the system (10) is configured:
to adjust the first force by adjusting a pressure, preferably a fluid pressure, preferably an oil pressure, and/or a mass or volume of fluid, preferably a mass or volume of a gas, preferably air, within at least a section of the first ride height setting device (20);
and/or
to adjust the second force by adjusting a pressure, preferably a fluid pressure, preferably an oil pressure, and/or a mass or volume of fluid, preferably a mass or volume of a gas, preferably air, within at least a section of the second ride height setting device (24).

12. The system (10) according to any of the preceding claims, wherein the first ride height setting device (20) is configured as and/or includes a hydraulic actuator configured to generate the first force and the second ride height setting device (24) is configured as and/or includes a pneumatic actuator, preferably an air spring, configured to generate the second force.

13. A vehicle (80) which includes one or more wheels (12) and the system (10) according to any of the preceding claims.

14. A method of controlling a ride height (rh) of a vehicle (80) which has one or more wheels (12), preferably by operating the system (10) according to any of claims 1 to 12, the method including:
adjusting the ride height (rh) of the vehicle by applying, by means of at least one first ride height setting device (20), at least one first force to at least a first section (22) of the vehicle at at least one wheel (12) of the vehicle;
at least partially maintaining the ride height (rh) set by the first ride height setting device (20) by applying, by means of at least one second ride height setting device (24), at least one second force to the first section (22) of the vehicle;
adjusting a ratio between the first force and the second force.

15. A control unit (40) for controlling a ride height (rh) of a vehicle (80) which has one or more wheels (12), the control unit (40) being configured to:
provide a first signal to at least one first ride height setting device (20) to trigger the first ride height setting device (20) to adjust the ride height (rh) of the vehicle by applying at least one first force to at least a first section (22) of the vehicle at at least one wheel (12) of the vehicle;
provide a second signal to at least one second ride height setting device (24) to trigger the second ride height setting device (24) to at least partially maintain the ride height (rh) set by the first ride height setting device (20) by applying at least one second force to the first section (22) of the vehicle;
adjust a ratio between the first force and the second force.
